# EUROPÄISCHE PATENTSCHRIFT

(11) **EP 0 887 247 B1**
(45) Veröffentlichungstag und Bekanntmachung des Hinweises auf die Patenterteilung: **29.08.2001**
(21) Anmeldenummer: 98110610.7
(22) Anmeldetag: 10.06.1998
(51) Int. Cl.: B62D 27/02, B62D 65/00

(54) **Verfahren zur Anbindung eines Aggregatenquerträgers an eine Vorbaustruktur**
Method for connecting an aggregate cross member on a vehicle front structure
Procédé pour connecter la traverse d'un sous-ensemble sur la structure avant d'un véhicule

(30) Priorität: 24.06.1997 DE 19726721
(43) Veröffentlichungstag der Anmeldung: 30.12.1998
(73) Patentinhaber: DaimlerChrysler AG, 70567 Stuttgart (DE)
(72) Erfinder: Lehamnn, Bernhard, Dr., 70567 Stuttgart (DE); Riestenpatt genannt Richter, Michael, 71149 Bondorf (DE); Schwer, Harald, 89079 Ulm (DE); Streicher, Dietmar, 72555 Metzingen (DE)

(56) Entgegenhaltungen:
- EP-A- 0 335 124
- FR-A- 2 650 223
- US-A- 2 636 749
- US-A- 4 955 663
- PATENT ABSTRACTS OF JAPAN vol. 013, no. 223 (M-829), 24. Mai 1989 & JP 01 036583 A (MAZDA MOTOR CORP), 7. Februar 1989
- PATENT ABSTRACTS OF JAPAN vol. 017, no. 018 (M-1352), 13. Januar 1993 & JP 04 244486 A (MAZDA MOTOR CORP), 1. September 1992
- PATENT ABSTRACTS OF JAPAN vol. 013, no. 060 (M-796), 10. Februar 1989 & JP 63 265792 A (HONDA MOTOR CO LTD), 2. November 1988

## Beschreibung

Die Erfindung betrifft ein Verfahren zur Anbindung eines Aggregatequerträgers zur Halterung einer Doppellenkerachse, deren obere Lenker im Bereich eines mit dem zugehörigen Längsträger verbundenen Radeinbaus angelenkt werden und deren untere Lenker am Aggretatequerträger gelagert werden, an eine Vorbaustruktur einer Rohbaukarosserie eines Personenkraftwagens, wobei der Aggregatequerträger über mehrere Befestigungspunkte mit zwei Längsträgern der Vorbaustruktur verbunden wird, und wobei jeder Radeinbau eine Federbeinaufnahme aufweist, wobei mehrere korrespondierende Fixierpunkte am Aggregatequerträger und an der Vorbaustruktur vorgesehen werden.

Bei Mercedes-Benz-Personenkraftwagen ist es bekannt, einen als Integralträger bezeichneten Aggregatequerträger als getrenntes Bauteil im Bereich einer Vorbaustruktur der Rohbaukarosserie des Personenkraftwagens vorzusehen. Dieser Integralträger wird von unten an Längsträgern der Vorbaustruktur angebunden. Der Integralträger dient zum einen zur Halterung eines Antriebsaggregates und zum anderen zur Aufnahme einer Doppellenkervorderachse. Dabei sind die unteren Querlenker am Integralträger und die oberen Querlenker im Bereich von Radeinbauten der Vorbaustruktur gelagert. Bei der Anbindung des Integralträgers an die Vorbaustruktur können Toleranzen auftreten, die zu nachträglichen Einstellungen der Achsgeometrien der Vorderachse führen. Erhöhte Fertigungstoleranzen könnten zudem dadurch auftreten, daß bei solchen Personenkraftwagen auch ein Frontmodul der Vorbaustruktur als getrennte Baueinheit von den Längsträgern gefertigt und anschließend an die Längsträger angefügt wird, die bereits fester Teil der Rohbaukarosserie sind.

Aufgabe der Erfindung ist es, ein Verfahren der eingangs genannten Art zu schaffen, das Fertigungstoleranzen reduziert.

Diese Aufgabe wird dadurch gelöst, daß die Lage der Fixierpunkte und der Befestigungspunkte durch Bezugspunkte definiert wird, die ausgehend von einer in der Mitte zwischen den Federbeinaufnahmen in Längsrichtung verlaufenden Bezugsmittelachse festgelegt werden. Durch die erfindungsgemäße Lösung ist es möglich, einen Aggregatequerträger ohne einen Bezug zu einem - da bei der Montage noch nicht vorhanden - Frontquerträger an den Stirnseiten der Längsträger zu montieren, und gleichzeitig die noch zulässigen Achstoleranzen einzuhalten, die keine Nacheinstellung der Achsgeometrien erforderlich machen. Lagetoleranzen der im Bereich der Konsolen montierten Federungs- und Dämpfungselemente zur Achse sind dadurch ohne Nacheinstellung auf die zulässigen Bauteilwerte reduziert. Die Lage der Bezugsmittelachse auf der Fertigungseinrichtung an der Rohbaukarosserie erfolgt über die Konsolen für Federungs- und Dämpfungselemente in Fahrzeugquerrichtung in einer Positionierstation. In Fahrzeuglängsrichtung an den Fixierlöchern, im Längsträger und in Fahrzeughochrichtung an den Anlageflächen für den Integralträger.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt schematisch zwei Längsträger mit angeschlossenen Federbeinaufnahmen einer Vorbaustruktur einer Rohbaukarosserie eines Personenkraftwagens, wobei an die Längsträger von vorne ein Frontmodul der Vorbaustruktur und von unten her ein Aggregatequerträger angebunden wird, und
- Fig. 2: einen Aggregatequerträger zur Anbindung an die Längsträger nach Fig. 1.

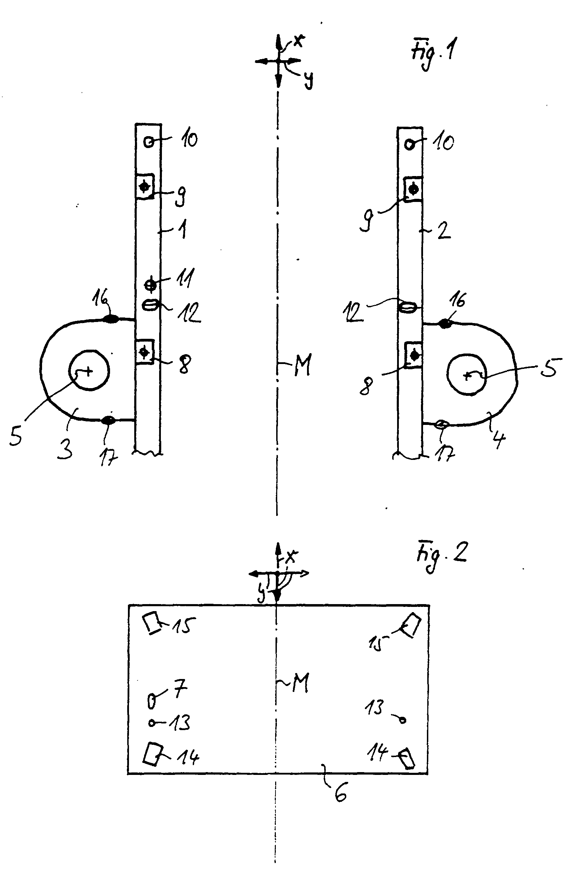

Eine Rohbaukarosserie für einen Personenkraftwagen weist eine Vorbaustruktur auf, bei der von einer nicht dargestellten Stirnwand und einer ebenfalls nicht dargestellten Bodengruppe aus zwei Vorbaulängsträger 1, 2 in Fahrzeuglängsrichtung nach vorne abragen. Von jedem Längsträger 1, 2 ragt nach außen ein Radeinbau 3, 4 ab, der fest mit dem zugeordneten Längsträger 1, 2 verbunden ist. Jeder Radeinbau 3 weist jeweils eine Konsole für Federungs- und Dämpfungselemente 5 auf. Die beiden Längsträger 1, 2 ragen frei nach vorne ab. Im Bereich des vorderen Stirnendes jedes Längsträgers 1, 2 ist eine Frontmodulaufnahme 10 vorgesehen, mittels der ein nicht dargestelltes Frontmodul als getrenntes Bauteil an die Längsträger 1, 2 und damit an die Vorbaustruktur anfügbar ist.

Um einen als Integralträger bezeichneten, nicht dargestellten Aggregatequerträger von unten an die Längsträger 1, 2 im wesentlichen ohne daraus resultierende Achstoleranzen für die von dem Integralträger getragene Vorderachse anzubinden, sind in den beiden Längsträgern 1, 2 insgesamt drei Fixierlöcher 11, 12 sowie vier Befestigungspunkte 8, 9 vorgesehen, die in nachfolgend näher beschriebener Weise in die Längsträger 1, 2 eingebracht werden.

Zur Herstellung der Radeinbauten links und rechts werden die Längsträger in einer Positionierstation in Fahrzeuglängsrichtung X in den im Einzelteil eingebrachten Fixierlöchern 12 aufgespannt. Dazu werden die Konsolen zur Aufnahme der oberen Achsanlenkpunkte 16, 17 auf einen festen Abstand gespannt sowie die Aufnahmekonsole für die Federungs- und Dämpfungselemente 5 ausgerichtet. In dieser Aufspannung wird der jeweilige Radeinbau verschweißt.

Bei dem Aufbau des Vorderwagens an die Rumpfkarosse werden die Radeinbauten in Fahrzeuglängsrichtung X in den Fixierlöchern 12 parallel zur Fahrzeugmittelachse M sowie in einer Fahrzeughochrichtung (nicht näher bezeichnet) an den Anlageflächen 8, 9 der Integralträgerbefestigungen positioniert und an eine nicht dargestellte Stirnwand einer Rumpfkarosse spannungsfrei gefügt. In einer nachfolgenden Fertigungsstation wird die Karosse in Fahrzeugquerrichtung Y an den Konsolen 5 für die Federungselemente ausgemittelt und das in Fahrzeuglängsrichtung definierte X-Maß über die Fixierlöcher 12, die in Fahrzeugquerrichtung Y verlaufende Langlöcher darstellen, eingerichtet. Sodann wird das Befestigungslochbild der oberen Achsanlenkpunkte 16, 17 sowie der Federungs- und Dämpfungselemente 5 in die entsprechenden Konsolen eingebracht. Relativ zu diesen Punkten werden in derselben Aufspannung ein rundes Fixierloch 11 für die Fahrzeugquerrichtung Y sowie die Bohrungen 8, 9 zur Integralträgerbefestigung in den Längsträger eingebracht. Der Integralträger hat zur Positionierung in Fahrzeuglängsrichtung X zwei Bohrungen 13 und für die Fahrzeugquerrichtung Y ein Langloch 7 in Fahrzeuglängsrichtung X. Die Position in Fahrzeugquerrichtung Y desselben ist ein festes Maß relativ zur geometrischen Mitte der unteren Achsanlenkpunkte am Integralträger.

Bei der Montage des Integralträgers an die Rohkarosse wird dieser mit Stiften in Fahrzeuglängsrichtung X in seinen Fixierlanglöchern 13 und an den Längsträgern in den Fixierlöchern 12 abgesteckt. In Fahrzeugquerrichtung X erfolgt ein Abstecken beim Integralträger in dem Langloch 7 und in dem in den Längsträger gebohrten linken Fixierloch 11. Dann werden in den Bohrungen 8, 9 die Befestigungsschrauben eingebracht und eingezogen.

## Patentansprüche

1. Verfahren zur Anbindung eines Aggregatequerträgers zur Halterung einer Doppellenkerachse, deren obere Lenker im Bereich eines mit dem zugehörigen Längsträger verbundenen Radeinbaus angelenkt werden und deren untere Lenker am Aggregatequerträger gelagert werden, an eine Vorbaustruktur einer Rohbaukarosserie eines Personenkraftwagens, wobei der Aggregatequerträger über mehrere Befestigungspunkte mit zwei Längsträgern der Vorbaustruktur verbunden wird, und wobei jeder Radeinbau eine Federbeinaufnahme aufweist, wobei mehrere korrespondierende Fixierpunkte am Aggregatequerträger und an der Vorbaustruktur vorgesehen werden,
**dadurch gekennzeichnet,**
daß die Lage der Fixierpunkte (11, 12) und der Befestigungspunkte (8, 9) durch Bezugskoordinaten definiert wird, die ausgehend von einer in der Mitte zwischen den Federbeinaufnahmen (5) in Längsrichtung verlaufenden Bezugsmittelachse (M) festgelegt werden.

2. Verfahren nach Anspruch 1,
**dadurch gekennzeichnet,**
daß ein längsträgerseitiger Fixierpunkt (11) als Bezugspunkt in Fahrzeuglängsrichtung (X) für die Positionierung von Lenkerkonsolen (16, 17) am Radeinbau (3) verwendet wird.

3. Verfahren nach Anspruch 2,
**dadurch gekennzeichnet, daß**
die Position eines längsträgerseitigen Fixierpunktes (11) als Bezugspunkt in Fahrzeugquerrichtung Y aus der Position von Konsolen für die Federung- und Dämpferelemente abgeleitet wird.

4. Verfahren nach Anspruch 3,
**dadurch gekennzeichnet,**
daß die Radeinbauten (3) an den längsträgerseitigen Fixierpunkten in Fahrzeuglängsrichtung ausgerichtet und mit einer Stirnwand der Rohbaukarosserie verbunden werden.

## Claims

1. A process for attaching an engine cross member to a frame forestructure of the body-in-white of a passenger car in order to mount a parallel link suspension in which the upper suspension links are linked in the area of a wheel insert connected to the corresponding side member and the lower suspension links are held in bearings on the engine cross member, the engine cross member being connected to two side members on the frame forestructure by means of several mounting points and each wheel insert having a MacPherson strut tower, with several corresponding fixing points being provided on the engine cross member and the frame forestructure,
**characterised in that**
the position of the fixing points (11, 12) and the mounting points (8, 9) is defined by means of reference co-ordinates which are determined on the basis of a central reference line running lengthwise in the middle of the MacPherson strut towers (5).

2. A process in accordance with Claim 1,
**characterised in that**
a fixing point (11) on the side member is used as a reference point lengthwise in relation to vehicle (X) to position suspension link brackets (16, 17) on the wheel insert (3).

3. A process in accordance with Claim 2,
**characterised in that**
the position of a fixing point (11) on the side member is derived as a reference point crosswise in relation to the vehicle (Y axis) from the position of the brackets for the suspension and attenuation elements.

4. A process in accordance with Claim 3,
**characterised in that**
the wheel inserts (3) are aligned with the fixing points on the side member lengthwise in relation to the vehicle and connected to one of the bulkheads of the body-in-white.

## Revendications

1. Procédé de liaison d'une traverse de montage de bloc avant pour fixer un essieu à double triangulation, dont le bras articulé supérieur est monté de façon articulée dans la zone d'un montage de roue relié au longeron afférent, et dont le bras articulé inférieur est monté sur la traverse support de groupe, la fixation se faisant sur une structure de bloc avant d'une carrosserie brute de voiture particulière, la traverse support de groupe étant reliée à deux longerons de la structure de bloc avant, par l'intermédiaire de deux points de fixation, et chaque montage de roue présentant un logement de jambe de suspension, plusieurs points de fixation correspondants étant prévus sur la traverse support de groupe et sur la structure de bloc avant,
**caractérisé en ce que**
la position des points de fixation (11, 12) et des points de montage (8, 9) est définie par des coordonnées de référence fixées en partant d'un axe de référence (M) s'étendant dans la direction longitudinale, au centre, entre les logements de jambe de fixation (5).

2. Procédé selon la revendication 1,
**caractérisé en ce qu**'
un point de fixation (11), situé côté longeron, est utilisé comme point de référence dans la direction longitudinale de véhicule (X), pour le positionnement de consoles pour bras articulés (16, 17) sur le montage de roue (3).

3. Procédé selon la revendication 2,
**caractérisé en ce que**
la position d'un point de fixation (11), situé côté longeron, faisant office de point de référence dans la direction transversale de véhicule (Y) est dérivée de la position des consoles prévues pour les éléments de suspension et d'amortissement.

4. Procédé selon la revendication 3,
**caractérisé en ce que**
les montages de roue (3) , au niveau des points de fixation situés côté longeron, sont orientés dans la direction longitudinale du véhicule et reliés à une paroi frontale de la carrosserie brute.
